# EUROPÄISCHE PATENTSCHRIFT

(11) **EP 2 217 779 B1**
(45) Veröffentlichungstag und Bekanntmachung des Hinweises auf die Patenterteilung: **07.09.2011**
(21) Anmeldenummer: 08855542.0
(22) Anmeldetag: 22.11.2008
(51) Int. Cl.: E05B 1/00, F24F 11/00

(54) **FENSTERGRIFF ODER TÜRGRIFF MIT POSITIONSÜBERWACHUNG ZUR ÜBERWACHUNG DES RAUMKLIMAS UND DES LÜFTUNGSVERHALTENS**
WINDOW HANDLE OR DOOR HANDLE WITH POSITION MONITORING FOR MONITORING ROOM CLIMATE AND VENTILATION BEHAVIOR
POIGNÉE DE FENÊTRE OU DE PORTE À CONTRÔLE DE POSITION POUR LE CONTRÔLE DE L'AIR DANS LA PIÈCE ET DES CONDITIONS DE VENTILATION

(30) Priorität: 29.11.2007 DE 202007016687 U
(43) Veröffentlichungstag der Anmeldung: 18.08.2010
(73) Patentinhaber: Meyer, Susanne, 42653 Solingen (DE); Meyer, Georg, 42653 Solingen (DE); Nicolay, Ralf, 42109 Wuppertal (DE); Nicolay, Frank, 42109 Wuppertal (DE)
(72) Erfinder: Meyer, Georg, 42653 Solingen (DE); Spitzer, Kurt, 42719 Solingen (DE); Disch, Markus, 42699 Solingen (DE)
(74) Vertreter: Vomberg, Friedhelm
(86) Internationale Anmeldenummer: PCT/DE2008/001944
(87) Internationale Veröffentlichungsnummer: WO 2009/068002

(56) Entgegenhaltungen:
- EP-A- 1 703 221
- WO-A-2004/109236
- DE-A1- 10 323 686
- DE-A1- 19 833 848
- DE-U1-202004 003 541
- US-A- 5 226 256

## Beschreibung

Die nachstehend beschriebene Erfindung betrifft eine Tür- oder Fenstergriffanordnung mit einem Fenster- oder Türgriff und einer Überwachungseinrichtung zum Überwachen des Raumklimas und des Lüftverhaltens in und von Innenräumen.

Zu wenig Lüften schadet. In "belebten" Innenräumen, die vom jeweiligen Raumnutzer (Eigentümer, Mieter oder sonstigen Nutzungsberechtigten) nur unregelmäßig oder gar nicht be- bzw. gelüftet werden, erhöht sich nachweislich die Luftfeuchtigkeit. Neben Atem und sonstigen Körperausdünstungen wird vor allem durch Kochen, Duschen bzw. Baden und das Lufttrocknen gewaschener Wäsche in Wohnräumen die Erhöhung der Luftfeuchtigkeit unvorteilhaft gefördert. Eine überdurchschnittlich hohe permanente Luftfeuchtigkeit regt die Schimmelpilzbildung, z.B. an Wänden und unter Tapeten, an. Durch in die Luft abgegebene Sporen wird einerseits die Gesundheit der Raumnutzer angegriffen und es kann durch Schimmelbildung und/oder Durchfeuchtung des Mauerwerkes andererseits auch das Mobiliar oder gar die Bausubstanz des Gebäudes erheblich geschädigt werden.

Ein übertriebenes Lüften von beheizten Innenräumen ist dagegen im Hinblick auf die Rohstoffknappheit und die damit verbundenen steigenden Energiekosten, sowie die globale Umwelt- und Klimaproblematik, unwirtschaftlich und daher tunlichst zu vermeiden.

Bislang wurden zur Ermöglichung eines optimalen Lüftverhaltens nachstehende Überwachungseinrichtungen vorgestellt:

In der DE 20 2004 003 541 U1 wird ein Messgerät zur Ermittlung und Einhaltung der Schimmelpilzparameter offenbart. Das dort beschriebene Messgerät kann direkt auf einem Bauteil angebracht werden und wird netzunabhängig mit Strom versorgt. Zur Ermittlung der Oberflächentemperatur, der Lufttemperatur und der Luftfeuchtigkeit ist das Gerät mit Sensoren ausgestattet, auf deren Grundlage das erwartete Schimmelpilzwachstum ermittelbar ist. Bei Unterschreiten bestimmter Grenzwerte wird ein akustisches oder optisches Alarmsignal abgegeben, auf das der Raumnutzer durch Lüften reagieren kann.

In der DE 10 2006 032 858 B4 wird eine Vorrichtung und ein Verfahren zum kontrollierten Lüften eines Raumes offenbart. Die Vorrichtung weist Folgendes auf:
o eine Temperaturmesseinheit zum Messen einer Temperatur innerhalb des Raumes,
o eine Temperaturmesseinheit zum Messen einer Temperatur außerhalb des Raumes,
o eine Feuchtigkeitsmesseinheit zum Messen einer relativen Luftfeuchtigkeit innerhalb des Raumes,
o eine Feuchtigkeitsmesseinheit zum Messen einer relativen Luftfeuchtigkeit außerhalb des Raumes,
o eine Einheit zum Veranlassen eines Lüftvorganges und
o eine Steuereinheit.

Beide Vorrichtungen sind derart ausgelegt, dass deren Anwender sie sachgerecht nutzen und in weiterer Folge das vorgeschlagene Lüftverhalten befolgen kann. Die nachträgliche Kontrolle (z.B. durch den Vermieter) eines in der Vergangenheit liegenden Lüftverhaltens (z.B. des Mieters) ist nach dem Stand der Technik der oben genannten Vorrichtungen nicht möglich. Sofern durch unsachgemäßes Lüften ein Schaden am Bauwerk durch Schimmelbildung und/oder Durchfeuchtung des Mauerwerkes entsteht, hat ein Vermieter derzeit kaum die Möglichkeit, dem Mieter das fehlerhafte Lüftverhalten aufzuzeigen bzw. ihm das Verschulden an dem durch mangelhaftes Lüften entstandenen Schaden nachzuweisen. Die Durchsetzung von Schadenersatzansprüchen gegenüber dem Mieter ist kraft schwieriger Beweisführung in solchen Fällen daher derzeit kaum möglich, so dass ein entstandener Schaden bislang vom Vermieter bzw. Eigentümer des Gebäudes getragen werden muss.

Weitere Vorrichtungen, die u. a. zum Erkennen von Fensterstellungen verwendet werden können, sind in der DE 103 23 686 A1 und in der WO 2004/109236 A1 beschrieben. Die DE 103 23 686 A1 betrifft einen Lüftungskontrollsensor, der eine genaue Kontrolle der Öffnungs- bzw. Lüftungsintervalle von Fenstern und Türen ermöglicht. Hierzu besitzt der Lüftungskontrollsensor einen elektronischen Kontakt, der so montiert ist, dass jedes Öffnen bzw. Schließen mit Öffnungszeiten und Datum elektronisch registriert und gespeichert wird. Die WO 2004/109236 A1 offenbart eine Überwachungsvorrichtung bei der die Fenster- oder Türgriffstellung mit einem Sensor erfasst wird, wobei die Streuereinheit und der Signalgeber (Funksender in Steuereinheit) in einem Fenster- oder Türgriff integriert sind.

Es ist daher Aufgabe der vorliegenden Erfindung, eine Vorrichtung zu schaffen, die einerseits den jeweiligen Raumnutzer (Eigentümer, Mieter oder sonstigen Nutzungsberechtigten) von Wohn-, Büro- und sonstigen beheizbaren Innenräumen darauf hinweist, wann zur Vermeidung von Schimmelbildung zu lüften ist, und andererseits eine Möglichkeit (z.B. für den Vermieter) zur nachträglichen Kontrolle des Lüftverhaltens (z.B. des Mieters) zu schaffen.

Diese Aufgabe wird durch die Tür- oder Fenstergriffanordnung nach Anspruch 1 gelöst.

Zum einen wird mit der vorgeschlagenen Tür- oder Fenstergriffanordnung mittels der Messdaten des Raumtemperatursensors und des Raumluftfeuchtigkeitssensors das optimale Lüftverhalten bestimmt, so dass der Raumnutzer über den Signalgeber zum Lüften aufgefordert wird. Zum anderen werden mittels einer ausles- bzw. auswertbaren Speichereinheit die gemessenen Daten, insbesondere die Raumtemperatur, die Luftfeuchtigkeit, aber auch die Fenster- oder die Türgriffstellungen, abrufbar gespeichert. Diese Daten können nach frei wählbaren Zeitabständen, die bei Bedarf auch mehrere Jahre betragen können, vom Raumnutzer selbst oder einem Dritten (z.B. dem Vermieter) ausgelesen und mittels Software auf einem Computer grafisch dargestellt werden. Mangelhaftes Lüften kann so rechtzeitig festgestellt bzw. korrigiert werden. Bei fortdauerndem und durch die aufgezeichneten Daten objektiv feststellbarem Lüftfehlverhalten (z.B. des Mieters), kann ein Verschulden bewiesen und damit auch ein Schadenersatzanspruch gegen den Verursacher geltend gemacht werden.

Neben der zu hohen Raumluftfeuchtigkeit und der suboptimalen Raumtemperatur tragen auch eine überhöhte CO₂-Konzentration sowie die Schimmelpilzsporendichte in der Luft zum fehlenden Behaglichkeitsgefühl des Raumnutzers und zur gesteigerten Schimmelbildung bei. Demzufolge ist über das zuvor Gesagte hinaus vorzugsweise vorgesehen, dass ein Sensor zur Messung der Schimmelpilzsporendichte und/oder der CO₂-Konzentration mit der Speicher- und Signalgebereinheit verbunden ist.

Nach einer bevorzugten Ausführungsform ist ferner vorgesehen, dass zusätzlich ein Sensor zur Außentemperatur-Messung und/oder Außenluftfeuchtigkeits-Messung vorhanden ist. Diese Sensoren können in einem beliebigen Abstand zur Fenster- oder Türgriffanordnung mit der Überwachungseinrichtung angeordnet und mit der Steuereinheit drahtlos verbunden sein. Alternativ dazu können die Außensensoren auch in der Fenster oder Türgriffanordnung selbst integriert sein, wobei vorgesehen ist, dass die Sensoren dann über eine kleine Bohrung durch den Fenster- oder Türrahmen an der Außenseite derselben angebracht sind. Durch diese Maßnahmen kann das Lüftverhalten den äußeren klimatischen Bedingungen, die sich insbesondere aufgrund der verschiedenen Tages- und Jahreszeiten ergeben, optimal angepasst werden. So wird der Raumnutzer beispielsweise nicht sofort zum Lüften aufgefordert, wenn die Außenluftfeuchtigkeit höher als die Luftfeuchtigkeit im Innenraum ist, selbst wenn diese einen bestimmten Grenzwert überschritten haben sollte.

Vorzugsweise wird der Signalgeber aktiviert, wenn einer der folgenden Zustände erreicht wird:
a) eine vorwählbare Temperaturdifferenz zwischen der Außen- und der Innentemperatur wird erreicht oder überschritten,
b) eine wählbare Innentemperatur wird erreicht oder unter- oder überschritten,
c) eine vorwählbare Zeitdauer wird erreicht oder überschritten, innerhalb der das Fenster oder die Tür geöffnet war,
d) eine vorwählbare CO₂-Konzentration wird überschritten und/oder
e) eine vorwählbare Luftfeuchtigkeitsdifferenz zwischen der Außen- und der Innenluftfeuchtigkeit wird überschritten, sofern eine vorwählbare Innenluftfeuchtigkeit ebenfalls überschritten wird.

Nach einer bevorzugten Ausführungsform der Überwachungseinrichtung ist vorgesehen, dass der Signalgeber ein optisches, akustisches oder mechanisches Signal abgibt. Für die Abgabe eines optischen Signals können beispielsweise Glühbirnen oder eine LED-Anzeige vorgesehen sein. Für akustische Signale bieten sich hochfrequente Signale oder Klingeltöne an. Mechanische Signale können beispielsweise in analoger Weise wie bei Mobiltelefonen über eine Vibration übertragen werden.

Damit insbesondere die Außentemperaturfühler und die Signalgeber an unterschiedlichen Orten positionierbar sind, ist vorzugsweise vorgesehen, die Informationen zwischen den Außentemperaturfühlern und dem Signalgeber drahtlos, vorzugsweise per Funk oder Infrarot, zu übertragen. Die Überwachungseinrichtung kann auch als zentrale Überwachungseinrichtung für mehrere Räume ausgebildet sein. Dazu ist vorgesehen, dass z.B. in einem Haushalt oder in einem Büro in jedem beheizbaren Innenraum eine Überwachungseinrichtung angeordnet ist. Diese Überwachungseinrichtungen sind mit einem zentralen Empfänger mit integriertem Signalgeber drahtlos verbunden, so dass die Klimaüberwachung für jeden Raum separat von einer beliebigen zentralen Position aus erfolgen kann. Nach einer besonderen Ausführungsform ist darüber hinaus vorgesehen, dass der Signalgeber unterschiedliche Signale abgeben kann, so dass jedem Signal ein Innentemperaturfühler und somit ein bestimmter Innenraum zugeordnet werden kann. Durch diese besondere Ausführungsform kann der Belüftungsvorgang in verschiedenen Räumen eines Haushalts gleichzeitig überwacht werden. Durch die verschiedenen Signale, die den verschiedenen Innenräumen zugeordnet sind, ist es dem Raumnutzer möglich, das eventuell übertriebene Lüften eines Raums schnell und zielsicher zu beenden.

Die efindungsgemäße Tür- oder Fenstergriffanordnung dient insbesondere auch dazu, einem Vermieter die Möglichkeit zu eröffnen, das Lüftverhalten seines Mieters zu überprüfen.

Die dazu notwendige auslesbare Speichereinheit weist bevorzugt eine Schnittstelle auf, wobei vorzugsweise ein USB-Port verwendet wird. Allerdings sind auch andere Schnittstellen, wie beispielsweise Bluetooth oder Infrarot, denkbar. Bevorzugt ist darüber hinaus vorgesehen, dass die Grenzwerte mittels eines über die Schnittstelle mit der Überwachungseinrichtung verbundenen Computers geändert werden können, so dass die Grenzwerte den gegebenen Rahmenbedingungen, wie beispielsweise der Bauart der Wohnlage oder den jeweiligen Jahreszeiten, anpassbar sind. Der Speicher soll bevorzugt nach dem Auslesen der Daten gelöscht werden können.

Die Überwachungseinrichtung weist nach einer weiteren Ausführungsform einen optischen Signalgeber mit einer LED-Anzeige auf, die vorzugsweise Licht unterschiedlicher Farben emittieren kann. Mittels der LED-Anzeige wird dem Raumnutzer angezeigt, ob und gegebenenfalls wie sein Lüftverhalten zu verbessern ist. Dazu sind bevorzugt unterschiedliche Blinksignale vorgesehen, die sich durch die Blinkfarbe, deren Intensität sowie die Blinkdauer unterscheiden.

Zur genauen Registrierung der Fenster- oder Türgriffposition (offen, geschlossen oder gekippt) ist bevorzugt vorgesehen, dass ein oder mehrere Magnete oder ein oder mehrere Hallsensoren im Wesentlichen ringförmig um den Fenstergriff angeordnet werden, um jede Griffstellung und damit die Stellung des Fensters, sowie auch sämtliche Änderungen, durch magnetische Impulse oder über einen oder mehrere Hallsensoren zu registrieren und auswertbar zu speichern.

Zur Stromversorgung aller elektronischen Bauteile sind bevorzugt eine Batterie, ein Akkumulator oder Solarzellen vorgesehen. Damit die Daten auch bei einem Batterie- oder Akkumulatorwechsel nicht verloren gehen, wird vorzugsweise eine nicht flüchtige Speichereinheit eingesetzt.

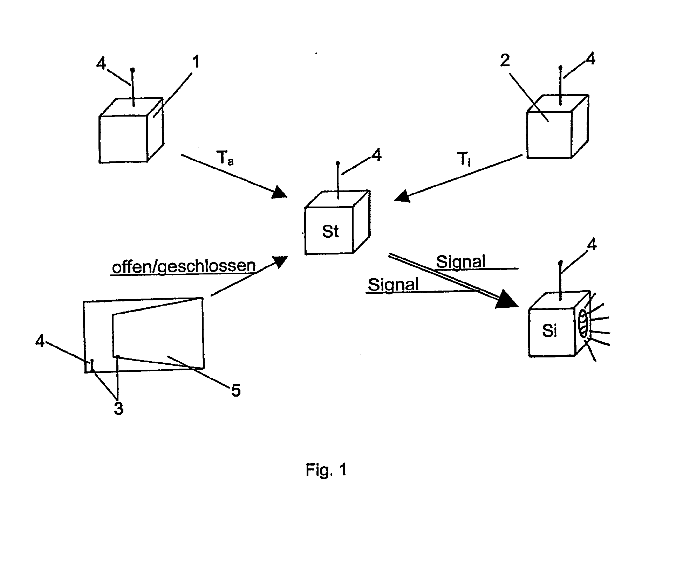

Die in der Figur 1 dargestellte Überwachungseinheit, die keine Ausführungsform der Erfindung darstellt, weist zwei Temperaturfühler 1, 2, einen Sensor 3 am Fenster 5, eine Steuereinheit St, sowie einen Signalgeber Si auf. Alle Bauteile besitzen zudem eine Antenne 4, über die die Daten übertragen werden. Der Temperaturfühler 1 misst die Außentemperatur T_{A} und Temperaturfühler 2 misst die Innentemperatur Tᵢ. Beide Messwerte werden drahtlos zu der Steuereinheit St übertragen. Das Fenster 5 weist an seiner Unterseite einen Sensor 3 auf, der registriert, ob das Fenster offen oder geschlossen ist. Diese Information wird ebenfalls der Steuereinheit St übertragen. Je nach gewähltem Programm regelt die Steuereinheit St, die mit dem Signalgeber Si drahtlos verbunden ist, ob der Signalgeber ein Signal abgibt oder nicht. Beispielsweise wird ein Signal abgegeben, wenn das Fenster geöffnet ist und die Temperaturdifferenz |T_{A}-Tₗ| einen wählbaren kritischen Wert überschritten hat.

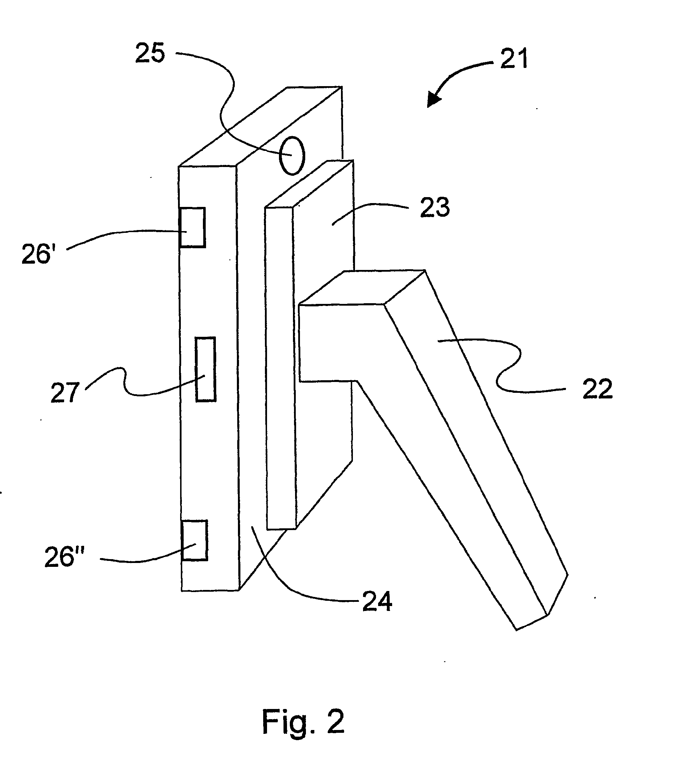

Ein konkretes Ausführungsbeispiel der vorliegenden Erfindung wird im Folgenden anhand der Figur 2 erläutert.

In Figur 2 ist eine Überwachungseinheit integriert in einer Fenstergriffanordnung 21 dargestellt. Der Fenstergriff 22 ist an der sogenannten Rosette 23 drehbar gelagert, wobei innerhalb der Rosette die (nicht dargestellten) Hallsensoren angeordnet sind, mit denen die Fenstergriffposition registrierbar ist. Die Rosette 23 ist auf der Überwachungseinrichtung 24 fixiert, an deren oberem Ende sich die Signaleinrichtung 25, die im dargestellten Fall eine LED-Anzeige ist, befindet. Seitlich an der Überwachungseinrichtung 24 sind die Löcher 26', 26" angeordnet, durch die Luft in die Überwachungseinrichtung 24 strömt. Somit können innerhalb dieser die klimatischen Größen gemessen werden. Zum Auslesen der gemessenen und registrierten Daten ist seitlich an der Überwachungseinrichtung eine USB-Schnittstelle 27 vorgesehen.

## Patentansprüche

1. Tür- oder Fenstergriffanordnung (21) mit einem Fenster- oder Türgriff (22) und einer Überwachungseinrichtung (24) zum Überwachen des Raumklimas und des Lüftverhaltens in und von Innenräumen mit einer auslesbaren Speichereinheit, einer Steuereinheit (St) und einem Signalgeber (25), die in der Tür- oder Fenstergriffanordnung integriert sind, sowie einem Sensor, der die relative oder absolute Raumluftfeuchtigkeit misst, einem Sensor, der die Fenster- oder Türgriffstellung in den Positionen offen, geschlossen oder gekippt registriert und einem Sensor, der die Raumtemperatur misst und bei Unterschreiten einer vorprogrammierbaren Temperatur und/oder bei Überschreiten einer vorprogrammierbaren Raumluftfeuchtigkeit der Signalgeber (25) aktiviert wird und die registrierten Tür- oder Fenstergriffstellungen zusammen mit den zugehörigen Zeitdaten in der Speichereinheit gespeichert werden.

2. Tür- oder Fenstergriffanordnung nach Anspruch 1, **dadurch gekennzeichnet, dass** ein Sensor zur Messung der Schimmelpilzsporendichte und/oder der CO₂-Konzentration mit der Speicher- und Signaleinheit (25) verbunden ist.

3. Tür oder Fenstergriffanordnung nach Anspruch 1 oder 2, **dadurch gekennzeichnet, dass** zusätzlich ein Sensor zur Außentemperatur-Messung und/oder Außenluftfeuchtigkeits-Messung vorhanden ist.

4. Tür- oder Fenstergriffanordnung nach Anspruch 3, **dadurch gekennzeichnet, dass** der Signalgeber (25, Si) aktiviert wird, wenn einer der folgenden Zustände erreicht wird:
a) eine vorwählbare Temperaturdifferenz zwischen der Außen- und der Innentemperatur wird erreicht oder überschritten, oder
b) eine wählbare Innentemperatur wird erreicht oder unter- oder überschritten,
c) eine vorwählbare Zeit ist erreicht oder überschritten, innerhalb der das Fenster oder die Tür geöffnet war,
d) eine vorwählbare CO₂-Konzentration wird überschritten, oder
e) eine vorwählbare Luftfeuchtigkeitsdifferenz zwischen der Außen- und der Innenluftfeuchtigkeit ist überschritten, sofern eine vorwählbare Innenluftfeuchtigkeit ebenfalls überschritten ist.

5. Tür- oder Fenstergriffanordnung nach einem der Ansprüche 1 bis 4, **dadurch gekennzeichnet, dass** der Signalgeber (25) ein optisches, akustisches oder mechanisches Signal abgibt.

6. Tür- oder Fenstergriffanordnung nach einem der Ansprüche 1 bis 5, **gekennzeichnet durch** eine drahtlose Informationsübertragung, vorzugsweise per Funk oder Infrarot-Signal zwischen den Sensoren, dem Signalgeber (25), und der Steuereinheit (St).

7. Tür- oder Fenstergriffanordnung nach einem der Ansprüche 1 bis 6, **dadurch gekennzeichnet, dass** diese als zentrale Überwachungseinrichtung (24) für mehrere Räume ausgebildet ist.

8. Tür- oder Fenstergriffanordnung nach einem der Ansprüche 1 bis 7, **gekennzeichnet durch** eine mit der Speichereinheit verbundene Schnittstelle, vorzugsweise einem USB-Port (27) zum Auslesen der gemessenen und registrierten Daten.

9. Tür- oder Fenstergriffanordnung nach einem der Ansprüche 1 bis 8, **dadurch gekennzeichnet, dass** der Signalgeber (25) mindestens eine LED-Anzeige aufweist, vorzugsweise mehrere LED-Anzeigen mit unterschiedlichen Lichtfarben.

10. Tür- oder Fenstergriffanordnung nach einem der Ansprüche 1 bis 9, **dadurch gekennzeichnet, dass** die Fenster- oder Türgriffstellung (offen, geschlossen oder gekippt) mittels eines oder mehrerer Magneten, die im Wesentlichen ringförmig angeordnet sind und je nach Stellung der Magnete die Griffstellung und damit die Stellung des Fensters und deren Änderung registrieren, oder über einen oder mehrere Hall-Sensoren registrierbar ist.

11. Tür- oder Fenstergriffanordnung nach einem der Ansprüche 1 bis 10, **dadurch gekennzeichnet, dass** zur Stromversorgung aller elektronischen Bauteile eine Batterie, ein Akkumulator oder eine Stromversorgung über Solarzellen vorgesehen sind, wobei die Speichereinheit nicht flüchtig ist, so dass die Daten auch bei einem Batterie- oder Akkumulatorwechsel oder einer sonstigen Stromunterbrechung nicht verloren gehen.

## Claims

1. Door- or windows-handle arrangement (21) with a door handle or a windows handle (22) and a monitoring apparatus for monitoring the room climate and the ventilation behaviour in and of interior rooms, with a readable storage unit, a controller (St) and an alarm (25, Si) that are integrated into the door- or window handle arrangement, as well as a sensor that measures the relative or absolute air humidity, a sensor that records the windows- or door handle position in the positions open, closed or tilted, and a sensor that measures the room temperature such that when the room temperature falls below a preprogrammable value and/or when the air humidity exceeds a preprogrammable value, the alarm (25, Si) is activated and that the recorded door- or windows handle positions are stored together associated time data in the storage unit.

2. Door- or windows-handle arrangement according to claim 1, **characterised in that** a sensor for measuring the mold spore density and/or the CO₂-concentration is connected to the storage unit and the alarm (25, Si).

3. Door- or windows-handle arrangement according to claim 1 or 2, **characterised in that**, in addition, a sensor for measuring the outside temperature and/or outside air humidity is provided.

4. Door- or windows-handle arrangement according to claim 3, **characterised in that** the alarm (25, Si) is activated if one of the following states is reached:
a) a preselectable temperature difference between the outside and inside temperature is reached or exceeded,
b) a selectable inside temperature is reached or the temperature falls below or exceeds it,
c) a preselectable time period within which the window or door was open is reached or exceeded,
d) a preselectable CO₂ concentration is exceeded, or
e) a preselectable air humidity difference between the outside and inside air humidity is exceeded provided that a preprogrammable inside air humidity is exceeded as well.

5. Door- or windows-handle arrangement according to any of the claims 1 to 4, **characterised in that** the alarm (25, Si) outputs an optical acoustic, or mechanical signal.

6. Door- or windows-handle arrangement according to any one of claims 1 to 5, **characterised by** a wireless data transfer, preferably via radio or infrared signal, between the sensors, the alarm (25, Si) and the controller (St).

7. Door- or windows-handle arrangement according to any one of claims 1 to 6, **characterised in that** it is configured as a central monitoring apparatus (24) for a plurality of rooms.

8. Door- or windows-handle arrangement according to any one of claims 1 to 7, **characterised by** an interface, preferably a USB port (27), connected to the storage unit for reading the measured and recorded data.

9. Door- or windows-handle arrangement according to any one of claims 1 to 8, **characterised in that** the alarm (25, Si) has at least one LED display, preferably a plurality of LED displays with different light colors.

10. Door- or windows-handle arrangement according to any one of claims 1 to 9, **characterised in that** the window handle or door handle position (open, closed, ajar) can be recorded by means of one or more magnets arrayed in a substantially annular manner and that, depending on the position of the magnets, record the handle position and thus the position of the window, or by means of one or more Hall sensors.

11. Door- or windows-handle arrangement according to any one of claims 1 to 10, **characterized in that** for the power supply to all electronic components, a battery, a wet cell, or a solar-cell power supply is provided, the storage unit being nonvolatile so that data do not get lost during changing of a battery or wet cell or any other power interruption.

## Revendications

1. Ensemble de poignée de porte ou de fenêtre (21) comprenant une poignée de fenêtre ou de porte (22) et un dispositif de contrôle (24) destiné à contrôler le climat d'une pièce et le comportement de ventilation de et dans des intérieurs et ayant une unité de stockage lisible, une unité de commande (St) et un émetteur de signaux (25) qui sont intégrés audit ensemble de poignée de porte ou de fenêtre, ainsi qu'un capteur qui mesure l'humidité d'air relative ou absolue de la pièce, un capteur qui enregistre la position de la poignée de fenêtre ou de porte dans les positions ouverte, fermée ou entrouverte et un capteur qui mesure la température de la pièce, dans lequel, lorsqu'une température pré-programmable n'est pas atteinte et/ou une humidité d'air pré-programmable de la pièce est dépassée, ledit émetteur de signaux (25) est activé et les positions enregistrées de la poignée de porte ou de fenêtre sont mémorisées, conjointement avec les données temporelles associées, dans ladite unité de stockage.

2. Ensemble de poignée de porte ou de fenêtre selon la revendication 1, **caractérisé par le fait qu'**un capteur de mesure de la densité de spores de moisissures et/ou de la concentration en CO₂ est relié à ladite unité de stockage et de signaux (25).

3. Ensemble de poignée de porte ou de fenêtre selon la revendication 1 ou 2, **caractérisé par le fait qu'**il existe en sus un capteur pour la mesure de la température extérieure et/ou pour la mesure de l'humidité d'air extérieure.

4. Ensemble de poignée de porte ou de fenêtre selon la revendication 3, **caractérisé par le fait que** ledit émetteur de signaux (25, Si) est activé lorsque l'un des états suivants est atteint :
a) une différence de température choisissable auparavant, entre la température extérieure et la température intérieure est atteinte ou dépassée ou
b) une température intérieure choisissable est atteinte ou n'est pas atteinte ou est dépassée,
c) un temps choisissable auparavant est atteint ou dépassé, à l'intérieur duquel la fenêtre ou la porte était ouverte,
d) une concentration en CO₂ choisissable auparavant est dépassée ou
e) une différence d'humidité d'air choisissable auparavant, entre l'humidité d'air extérieure et l'humidité d'air intérieure est dépassée, si une humidité d'air intérieure choisissable auparavant est dépassée elle aussi.

5. Ensemble de poignée de porte ou de fenêtre selon l'une quelconque des revendications 1 à 4, **caractérisé par le fait que** ledit émetteur de signaux (25) émet un signal optique, acoustique ou mécanique.

6. Ensemble de poignée de porte ou de fenêtre selon l'une quelconque des revendications 1 à 5, **caractérisé par** une transmission d'informations sans fil, de préférence par radio ou par signal infrarouge, entre lesdits capteurs, ledit émetteur de signaux (25) et ladite unité de commande (St).

7. Ensemble de poignée de porte ou de fenêtre selon l'une quelconque des revendications 1 à 6, **caractérisé par le fait que** celui-ci est réalisé en tant que dispositif central de contrôle (24) pour plusieurs pièces.

8. Ensemble de poignée de porte ou de fenêtre selon l'une quelconque des revendications 1 à 7, **caractérisé par** une interface reliée à ladite unité de stockage, de préférence un port USB (27) pour lire les données mesurées et enregistrées.

9. Ensemble de poignée de porte ou de fenêtre selon l'une quelconque des revendications 1 à 8, **caractérisé par le fait que** ledit émetteur de signaux (25) présente au moins un afficheur à DEL, de préférence une pluralité d'afficheurs à DEL à couleurs de lumière différentes.

10. Ensemble de poignée de porte ou de fenêtre selon l'une quelconque des revendications 1 à 9, **caractérisé par le fait que** la position de la poignée de fenêtre ou de porte (ouverte, fermée ou entrouverte) peut être enregistrée par le biais d'un ou de plusieurs aimant(s) qui sont disposés pour l'essentiel de façon annulaire et enregistrent, selon la position des aimants, la position de la poignée et ainsi la position de la fenêtre et le changement de celle-ci, ou par le biais d'un ou de plusieurs capteur(s) à effet Hall.

11. Ensemble de poignée de porte ou de fenêtre selon l'une quelconque des revendications 1 à 10, **caractérisé par le fait que**, pour l'alimentation en courant de l'ensemble des composants électroniques, on prévoit une pile, un accumulateur ou une alimentation électrique par cellules solaires, ladite unité de stockage étant non volatile de sorte que les données seront conservées également en cas de changement de pile ou d'accumulateur ou dans le cas d'une autre rupture de courant.
